(19) Europäisches Patentamt / European Patent Office / Office européen des brevets

(11) **EP 2 386 041 B1**

(12) **EUROPEAN PATENT SPECIFICATION**

(45) Date of publication and mention
of the grant of the patent:
**29.05.2013 Bulletin 2013/22**

(21) Application number: **10704226.9**

(22) Date of filing: **07.01.2010**

(51) Int Cl.:
**F16L 55/027** *(2006.01)*     **F15D 1/02** *(2006.01)*

(86) International application number:
**PCT/NO2010/000005**

(87) International publication number:
**WO 2010/080037 (15.07.2010 Gazette 2010/28)**

(54) **DEVICE FOR PROVIDING A CONTROLLABLE PRESSURE REDUCTION**

VORRICHTUNG FÜR STEUERBARE DRUCKMINDERUNG

DISPOSITIF POUR ASSURER UNE RÉDUCTION DE PRESSION POUVANT ÊTRE RÉGULÉE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **07.01.2009 NO 20090074**

(43) Date of publication of application:
**16.11.2011 Bulletin 2011/46**

(73) Proprietor: **Framo Engineering AS
5862 Sandsli, Bergen (NO)**

(72) Inventors:
• **KANSTAD, Stig, Kåre
N-5244 Fana (NO)**
• **LANGEDAL, Terje
N-5252 Søreidgrend (NO)**

(74) Representative: **Raybaud, Hélène F. A. et al
Etudes & Productions Schlumberger
Intellectual Property Law Department
1, rue Henri Becquerel
B.P. 202
92142 Clamart Cedex (FR)**

(56) References cited:
**WO-A1-2006/087746     DE-A1-102007 050 225
FR-A1- 2 340 465        US-A- 4 106 525**

**Description**

FIELD OF THE INVENTION

The present invention relates to a device for providing a controllable pressure reduction between a first fluid conducting pipe and a second fluid conducting pipe.

TECHNICAL BACKGROUND

Nozzles are commonly used as pressure reduction devices to provide a pressure reduction in a fluid. However, there are several technical challenges involved with this technology. First of all, the maximal pressure reduction across one nozzle should be limited, in order to prevent unacceptable velocities in the nozzle throat which amongst other can cause problems with noise, vibration, erosion and cavitation. Another major drawback when using nozzles are furthermore that the loss coefficients found in literature depends on the Reynolds number (laminar/turbulent flow). Limited and somewhat uncertain data is available at lower Reynolds numbers (turbulent flow). The nozzle loss coefficient versus Reynolds number is not well understood and becomes more and more uncertain as the Reynolds number moves into the transient and laminar range of Reynolds numbers.

If a large pressure reduction is required, several nozzles must be connected serially. There must be a certain distance between each nozzle to avoid that they interact on each other hence influencing the actual pressure drop versus estimated. That is, there must be sufficient distance between adjacent nozzles to dissipate the energy in the fluid jet in the bulk fluid and to reestablish a fully developed flow regime prior to reaching the next nozzle in series for the loss coefficients versus Reynolds numbers to be valid. Hence, the total length of the pressure reduction device may be very long if the required pressure drop is large.

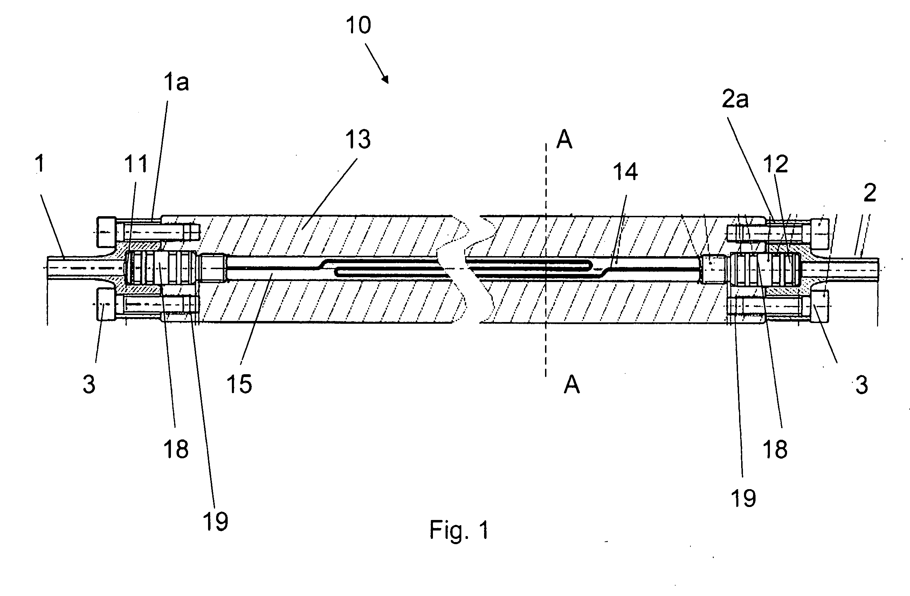

In US 4,106,525 it is described a fluid restrictor, according to the preamble of claim 1, having a long path lengt capable of absorbing energy with less noise generation. The restrictor is adapted for attachment between two adjacent lengths of a pipeline. In one of the embodiments (shown in fig. 1) it is shown that the device has a core 5 having an helical groove 8 provided in its external cylindrical surface.

In DE 10 2007 050225 it is shown a a plug connection for lines carrying a fluid under pressure.

In WO 2006/087746 it is described a pressure-pulsation-damping fluid supply conduit comprising a flexible covering pipe, which has end portions opposite to one another; tubular elements having respective first axes and being connected to the end portions; respective couplings, connected to the tubular elements in such away that they are free to rotate. Moreover, flexible pipes, which have respective fixed portions are connected to the respective couplings and respective free portions located radially facing one another.

In US 4,043,360 it is described a pressure reducing device for fluids which comprises an elongated body the peripheral surface of which is provided with grooves along its length. The body is tightly surrounded by a sheath. The length of the body is divided into a plurality of peripheral chambers in which axially extending banes force the fluid to flow along three forward steps and one reverse step within each chamber changing airways the direction at about 90° angles.

Pressure reduction devices are for example used for reducing the pressure of fluids used during hydrocarbon (oil/gas) production, such as fluids flowing from oil and/or gas wells, control fluids, water injection fluids etc. Such fluids may comprise particles, debris etc which may obstruct the fluid flow. In subsea installations it is important that equipment is reliable and does not get obstructed or clogged, since maintenance and repair operations are expensive and complicated.

Moreover, the operation of the nozzle should be predictable and controllable. However, nozzle behavior is not well characterized at low Reynolds numbers, where the fluid may vary between so-called turbulent flow and so-called laminar flow. Hence, the output pressure of such pressure reduction devices is not always controllable under such operation conditions, which is undesired or unacceptable in certain applications.

The object of the present invention is to provide a device for providing a controllable pressure reduction, where the disadvantages above are avoided.

SUMMARY OF THE INVENTION

The present invention relates to a device for providing a controllable pressure reduction between a first fluid conducting pipe and a second fluid conducting pipe, where the device comprises:

- a fluid inlet in fluid communication with the first fluid conducting pipe;
- a fluid outlet in fluid communication with the second fluid conducting pipe;
- one continuous fluid communicating, pressure reduction channel provided between the fluid inlet and the fluid outlet, where the pressure reduction channel reduces the pressure of the fluid due to frictional losses between the fluid in the channel and the walls of the channel,

where the pressure reduction channel is provided in a main body fastened between an end of the first fluid conducting pipe and an end of the second fluid conducting pipe and where the pressure reduction channel is provided in an insert body inserted into an opening of the main body,

characterized in that the insert body comprises a first section and a second section, where the pressure reduction channel is provided as a recess in a contact surface of the first section being in contact with a corresponding contact surface of the second section.

In one aspect, the insert body is cylindrical.

In one aspect, the first section and second section has a semicircular cross sectional shape.

In one aspect, the length of the pressure reduction channel is longer than the length of the device.

In one aspect, the pressure reduction channel is S-shaped or spiral shaped or sinus shaped.

In one aspect, it further comprises connectors for pressure safe connection of the fluid inlet and the fluid outlet respectively to the respective ends of the first and second fluid conducting pipes.

In one aspect, the connector comprises recesses for packer elements.

In one aspect, it comprises threaded openings for fastening to the respective ends of the pipes by means of threaded bolts.

In one aspect, the relationship between the channel length L and the side length s or the relationship between the channel length L and the diameter d of the channel should be large, for example 200 or more.

In one aspect, the relationship between the channel length L and the side length s or the relationship between the channel length L and the diameter d of the channel is in the range 600 - 1200.

In one aspect, the relationship between the channel length L and the side length s or the relationship between the channel length L and the diameter d of the channel is approximately 1200.

DETAILED DESCRIPTION

Embodiments and aspects of the present invention will now be described with reference to the enclosed drawings, where:

Fig. 1 illustrates a cross sectional side view of a first embodiment;

Fig. 2 illustrates a cross sectional front view of the first embodiment in fig. 1 (cross section along A-A in fig. 1);

Fig. 3 illustrates a front view of the embodiment shown in fig. 1;

Fig. 4 illustrates a cross sectional side view of an insert body;

Fig. 5 illustrates a cross sectional front view of the insert body in fig. 4 (cross section along line B-B in fig. 4);

Fig. 6 illustrates a front view of the insert body in fig. 4;

Fig. 7 illustrates a cross sectional side view of a connector;

Fig. 8 illustrates a perspective view of the connector in fig. 7;

Fig. 9 illustrates the main body 13;

Fig. 10 illustrates an enlarged view of one end of the main body 13 shown in fig. 9;

Fig. 11 illustrates a test diagram of the pressure reduction device;

Fig. 12 illustrates an alternative embodiment of a channel provided in the insert body;

Fig. 13 illustrates an alternative embodiment of a channel provided in the insert body;

Fig. 14 illustrates an alternative embodiment of a channel provided in the insert body;

Fig. 15 illustrates a variant that is not a part of the invention, where a channel is provided on the outer surface of the insert body.

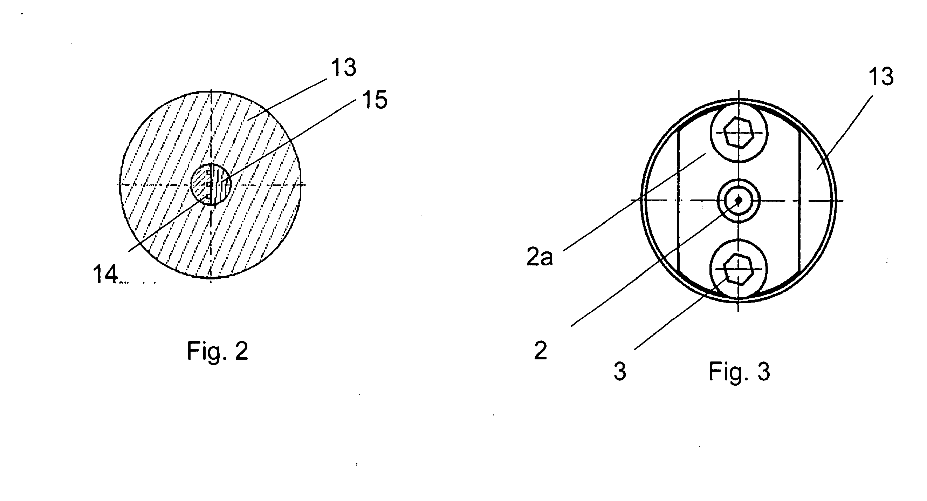

It is now referred to fig. 1 and fig. 2. A device 10 for providing a controllable pressure reduction is provided between a first fluid conducting pipe 1 and a second fluid conducting pipe 2. The first fluid conducting device 1 and the second fluid conducting device 2 comprises ends 1a, 2a respectively for facilitating the fastening of the device 10 to the pipes 1, 2. The ends 1a, 2a may be end flanges etc.

It should be noted that the term "controllable" here is used to express "to keep control" of the pressure reduction, i.e. the pressure reduction should be predictable for all Reynolds numbers. For high Reynolds numbers a controllable or predictable pressure reduction is achieved. Moreover, also for low Reynolds numbers, where the fluid may vary between so-called turbulent flow, so-called intermediate or transient flow and so-called laminar flow. Hence, the term "controllable" as used herein does not mean "adjustable".

The device 10 comprises a fluid inlet 11 in fluid communication with the first fluid conducting pipe 1 and a fluid outlet 12 in fluid communication with the second fluid conducting pipe 2. A fluid communicating, pressure reduction channel 14 is provided between the fluid inlet 11 and the fluid outlet 12. Hence, fluid may flow from pipe 1 into the fluid inlet 11, further through the channel 14 and out via the fluid outlet 12 to the pipe 2.

The fluid communicating, pressure reduction channel 14 reduces the pressure in the fluid due to frictional losses between the fluid in the channel and the walls of the channel 14. This will be explained in detail below.

The device 10 may comprise a main body 13. The main body 13 is fastened between the end 1a of the first fluid conducting pipe 1 and the end 2a of the second fluid conducting pipe. The pressure reduction channel 14 may be provided in the main body 13.

The main body may have an external cylindrical shape, as shown in the drawings, however other shapes may be possible, depending on the application etc.

Moreover, the device may comprise fastening means for fastening to the respective ends 1a, 2a, as shown in fig. 1 and fig. 3. For example threaded openings 19 may be provided in the main body 13 for fastening to the respective ends 1a, 2a of the pipes 1, 2 by means of threaded bolts 3. It should be noted that the design of the device 10 may vary according to the area of application. For example, since the pressure difference between the input fluid and the output fluid, and the pressure difference between the input fluid/output fluid and the surroundings may be large, one must ensure that the device 10 is designed in a pressure sealed way, so that no fluid is spilled to the surroundings.

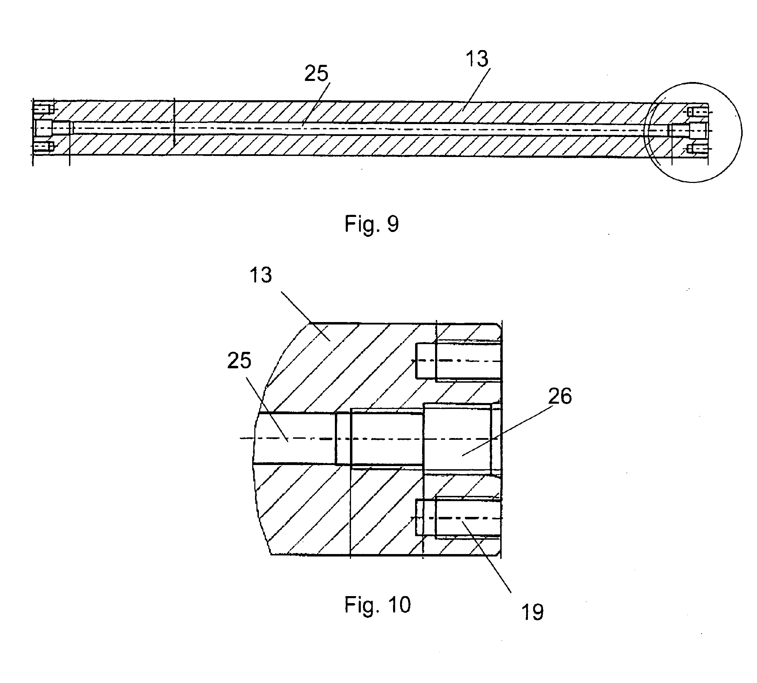

In the embodiment shown in fig. 1 and 2, the main body 13 comprises a central opening 25 (fig. 9). An insert body 15 is adapted to fit inside the opening of the main body 13. The pressure reduction channel 14 is provided in the insert body 15 inserted into the opening of the main body 13. Hence, the main body 13 serves as a pressure barrier around the insert body 15 and as a holder for holding and fastening the insert body 15 to the pipe ends 1a, 2a.

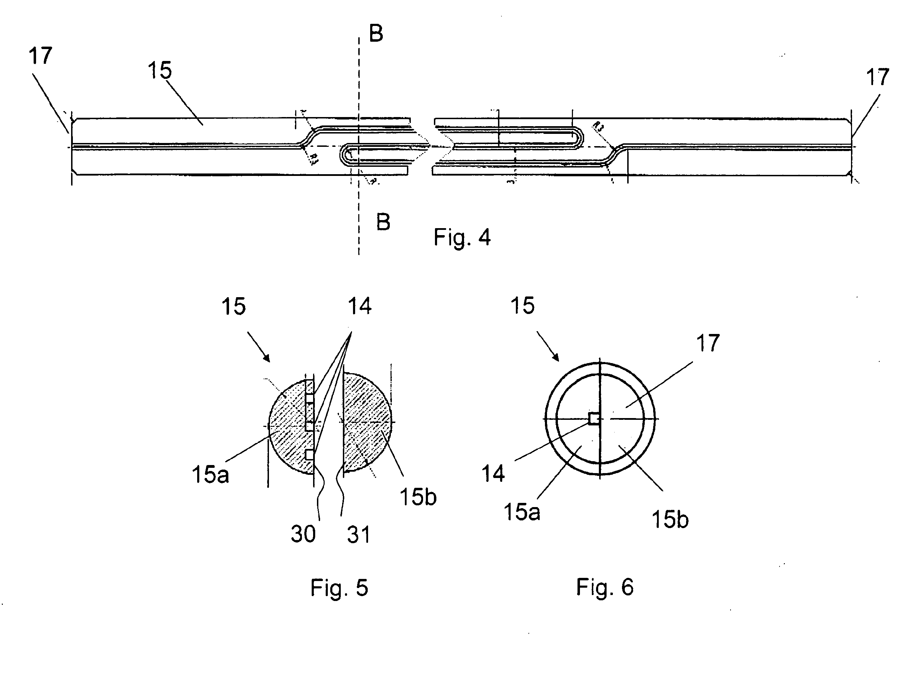

The insert body 15 will now be described with reference to fig. 4, 5 and 6. The insert body 15 comprises a first section 15a and a second section 15b. In the present embodiment, the insert body 15 is cylindrical, and each section 15a, 15b has a semicircular cross sectional shape as shown in fig. 5 and 6. The pressure reduction channel 14 is provided as a recess in the first section 15a. More specifically, the pressure reduction channel 14 is provided in the first section 15a as a recess in the contact surface 30 of the first section 15a being in contact with a corresponding contact surface 31 of the second section 15b when inserted into the main body 13.

The first section 15a and the second section 15b may be welded to each other or may be fastened to each other by other means before insertion into the main body 13.

The insert body 15 may have a substantially circular end surface 17 in each end, as indicated in fig.4 and fig. 6.

In the following, a calculation model for the frictional losses will be explained. The total frictional pressure loss is given by:

$$\Delta p_{Total} = f \cdot \frac{l}{d_h} \cdot \rho \cdot \frac{u^2}{2} + \sum k \cdot \rho \cdot \frac{u^2}{2} \approx f \cdot \frac{l}{d_h} \cdot \rho \cdot \frac{u^2}{2}$$

Where:

f     Moody friction factor
l     Length of pipe/hose
$d_h$     Hydraulic diameter
p     Density
u     Velocity

The hydraulic diameter is defined as:

$$d_h = \frac{4 \cdot A}{P}$$

Where:

A    Cross sectional area
P    Wetted perimeter

The friction factor f depends on the Reynolds number which is defined as:

$$Re_h = \frac{\rho \cdot d_h \cdot v}{\mu}$$

The flow is laminar if the Reynolds number is below 2000, in the critical zone between 2000 and 4000 and turbulent above 4000.

For turbulent flow the friction factor f can be estimated using the Colebrook-White equation:

$$f = \frac{0.25}{\left[ \log\left( \frac{k}{3.7 \cdot d} + \frac{5.74}{Re_h^{0.9}} \right) \right]^2}, Re_h > 4000$$

Where:

k    Absolute roughness (a value of 0.05mm is used herein, however, this will vary dependent on roughness)

Re    Reynolds number

[0042] The friction factor for laminar flow depends on the actual geometry. The effective diameter approach is used for non-circular ducts. The following relations apply for circular ducts and non-circular ducts:

Circular ducts:

$$f = \frac{64}{Re}, Re_h \le 2000$$

Non-circular ducts (rectangles):

The laminar friction constant for rectangles with height/with ratios going from 0 to 1 can be obtained through the following curve fit:

$$f \cdot Re_h = -35{,}0666 \cdot \left( \frac{b}{a} \right)^5 + 116{,}1653 \cdot \left( \frac{b}{a} \right)^4 - 181{,}6768 \cdot \left( \frac{b}{a} \right)^3$$

$$+ 192{,}0621 \cdot \left( \frac{b}{a} \right)^2 - 130{,}5667 \cdot \left( \frac{b}{a} \right) + 95{,}99257, Re_h \le 2000$$

Here, a and b are width and height of a rectangle. The curve fit is based on a table for loss coeffisents, table 7.6 in "Fundamentals of fluid mechanics" by Philip M. Gerhart and Richard J. Gross, 1985 (ISBN 0-201-1410-0)

The effective diameter is given by:

$$D_{eff} = \frac{64}{f \cdot \mathrm{Re}_h} \cdot D_h$$

And the friction factor for use in the pressure drop calculations is given by:

$$f = \frac{64}{\mathrm{Re}_h} \cdot \frac{D_h}{D_{eff}}$$

It is recommended to use linear interpolation between laminar and turbulent friction factor in the critical zone. That is, the turbulent friction factor assuming $\mathrm{Re}_h$ equal to 4000 and the laminar friction factor is estimated assuming a Reynolds number of 2000. The effective friction factor is then estimated from:

$$f = \frac{\mathrm{Re}_h - 2000}{2000} \cdot f_{turbulent-4000} + \left(1 - \frac{\mathrm{Re}_h - 2000}{2000}\right) \cdot f_{la\,\min\,ar-2000}$$

The pressure reduction channel 14 may have a square, semicircular or rectangular cross sectional shape, or another suitable cross sectional shape. The cross sectional area may typically be 0,2 - 5 mm$^2$, preferably 1 - 3 mm$^2$ depending on the required pressure drop, the fluid viscosity, particle size of the fluid to avoid obstructions etc.

In the embodiment in fig. 4, 5 and 6, the cross sectional area of the channel is square with sides of 1 x 1 mm.

The required length of the pressure reduction channel 14 should be performed based on the above calculations and assumptions. In the embodiment shown in fig. 4, the required length of the pressure reduction channel 14 was computed to be approximately 1,2 m.

As shown, the pressure reduction channel 14 is longer than the length of the device 10. Consequently, the size of the pressure reducing device can be decreased further.

As shown in fig. 4, the pressure reduction channel 14 is substantially S-shaped in the central area of the insert body. In this way, the length of the channel 14 is approximately twice the length of the device 10. The main body 13 of the device 10 shown in fig. 1 has a length of approximately 60 cm.

It should be mentioned that if a corresponding pressure reduction device should be provided by means of serially connected nozzles for use in the same area of application as the present invention, it would have been considerably longer.

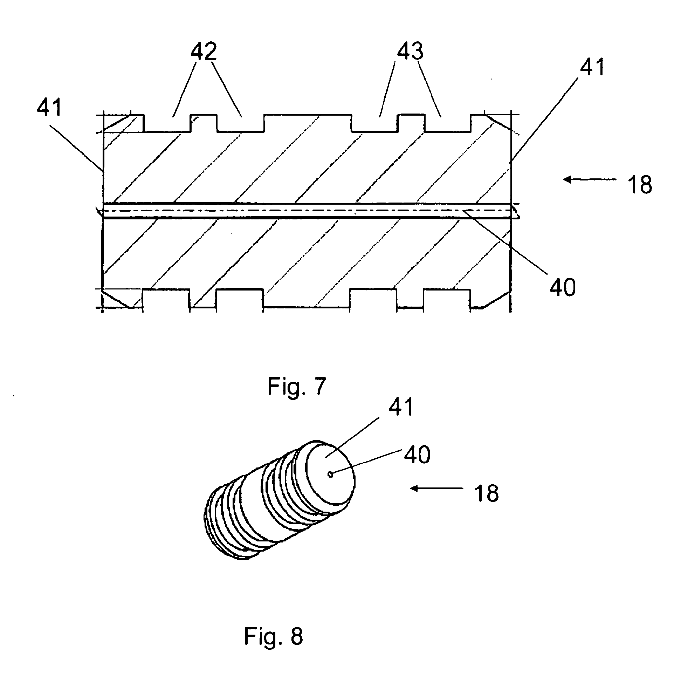

The device 10 may further comprise connectors 18 for pressure safe connection of the fluid inlet 11 and the fluid outlet 12 respectively to the respective ends 1a, 2a of the first and second fluid conducting pipes 1, 2. An embodiment of the connector 18 is shown in detail in fig. 7 and 8.

The connector 18 is substantially cylindrical and comprises a central fluid communicating channel 40 in its longitudinal direction. The fluid communicating channel 40 provides fluid communication between the ends of the insert body 15 and the pipes 1, 2 respectively, as shown in fig. 1. The connector comprises substantially circular end surfaces 41 in both ends, one of which is provided for contact with the end surface 17 of the insert body 15 and one of which is provided for contact with a corresponding surface of the end flanges of the ends 1a or 2a respectively.

The connector 18 further comprises recesses 42, 43, adapted for packer elements (not shown) such as o-rings etc as pressure barriers. Packer elements can be provided in recesses 42 as a pressure barrier between the main body 13 and the connector 18, and packer elements can be provided in the recesses 43 as a pressure barrier between the end flange of the ends 1a, 2a respectively and the connectors 18.

Fig. 9 and 10 illustrates the main body 13. Here it is shown that the central opening 25 in the main body 13, adapted to receive the insert body 15, has a slightly larger diameter near the ends of the main body, as indicated with reference number 26. This part 26 of the opening 25 is adapted to receive one end of the connector 18. Hence, the insert body 15 has a length that is smaller than the length of the main body 13.

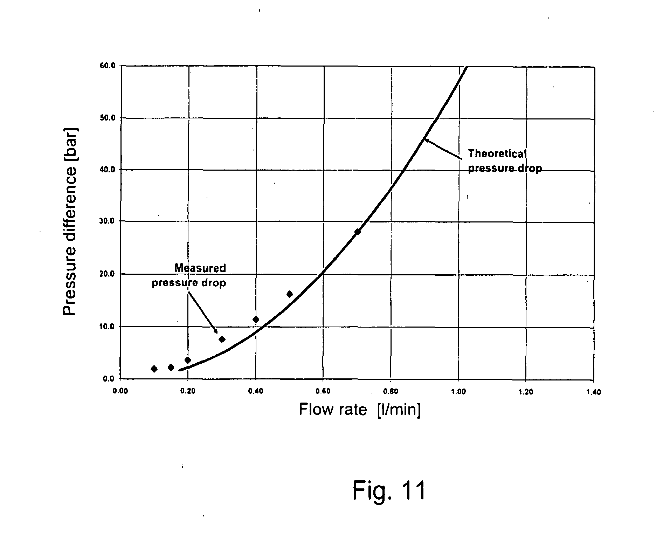

It is now referred to fig. 11 showing a curve representing flow rate along the horizontal axis and pressure difference along the vertical axis. The black solid line represents a trend line through points that are computed mathematically based on theory.

The large squares represent measured pressure drop at different flow rates when testing the embodiment shown in fig. 1. As shown, the test shows that the device 10 works according to theory.

For the design of the pressure reduction channel 14, the relationship between the length and the diameter is of particular interest. The following table shows the relationship for some relevant values:

| Channel area A [mm2] | Channel length L [mm] | L/A | Us (square cross section) s=SQRT(A) | Ud (circular cross section) d=2SQRT(A/PI) |
|---|---|---|---|---|
| 0,2 | 1200 | 6000 | 2683 | 2378 |
| 1 | 1200 | 1200 | 1200 | 1063 |
| 3 | 1200 | 400 | 693 | 614 |
| 5 | 1200 | 240 | 537 | 476 |

As shown in the table, the relationship L/s (s is side length of square channel) or relationship L/d (d is diameter in case of a circular channel) should be large, for example 200 or more. In other embodiment, these relationships L/s or L/d could be even larger, for example in the range 600 - 1200.

In the embodiment shown in the drawings, the relationship L/s is ca 1200. Of course, as the table shows, these relationships L/s or L/d could be even larger.

In the description above, the pressure reduction channel 14 is provided as one and only one continuous channel between the fluid inlet 11 and the fluid outlet 12. Hence, since the diameter of the one pressure reduction channel 14 is smaller than the diameter of the first fluid conducting pipe and a second fluid conducting pipe, the fluid will get increased flow velocity when flowing through the pressure reduction channel. Under some operation conditions, this may cause the flow to change from the laminar or transient phase to turbulent phase.

There are several alternative embodiments of the present invention. For example, the pressure reduction channel 14 may be provided as a recess in both the first and the second sections 15a, 15b of the insert body 15.

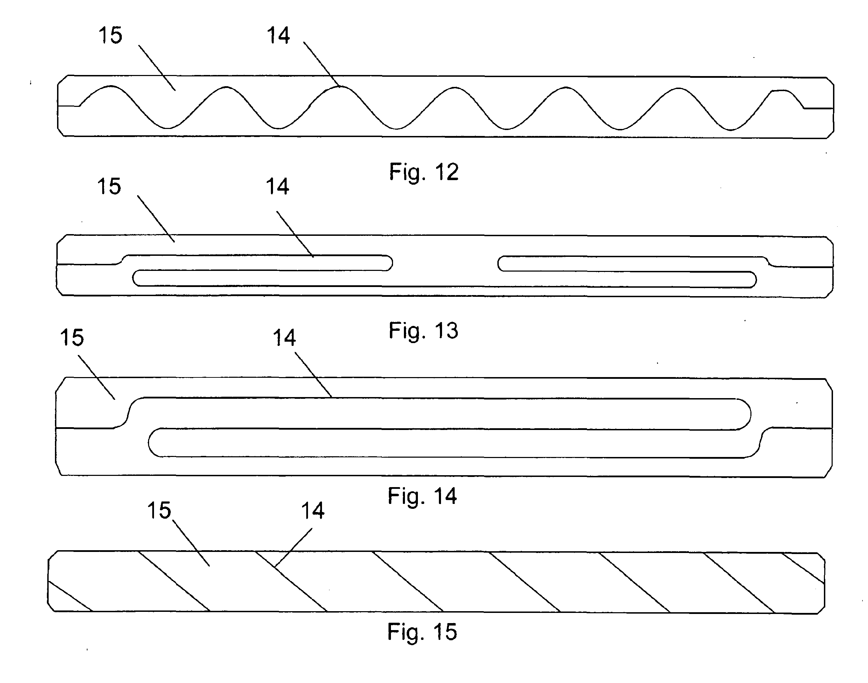

Moreover, the pressure reduction channel may have other shapes than the S-shaped form described above. In an alternative embodiment, the channel 14 may be sinus shaped, as illustrated in fig. 12.

In yet an alternative embodiment, the channel may comprise two S-shaped channels is series, as shown in fig. 13.

In yet an alternative embodiment, the channel may comprise two S-shaped channels located over each other, as shown in fig. 14.

In an alternative embodiment which is not part of the present invention, the insert body may be a cylinder (which is not dived in two subsections), where the channel 14 may be provide as a recess in the outer surface. In such an embodiment, the channel may be shaped like a spiral as shown in fig. 15. Here, the channel is provided between the recess in the insert body and the inner opening 25 of the main body 13. Alternatively, the channel 14 could be provided in similar way in the inner surface of the opening 26 of the main body, i.e. like the helical groove of a rifle barrel. Here, the insert body could be a cylindrical body without any recess or groove.

It should be mentioned that the pressure reduction channel 14 may have other forms than rectangular, square or circular, for example it could be triangular or polygonal.

According to the invention, it is achieved a device for providing a controllable pressure reduction between a first fluid conducting pipe and a second fluid conducting pipe, i.e. the device is behaving in a controllable or predictable manner so that a predetermined pressure drop is achieved also for fluids with low Reynolds numbers.

**Claims**

1. Device for providing a controllable pressure reduction between a first fluid conducting pipe (1) and a second fluid conducting pipe (2), where the device (10) comprises:

   - a fluid inlet (11) in fluid communication with the first fluid conducting pipe (1);
   - a fluid outlet (12) in fluid communication with the second fluid conducting pipe (2);
   - one continuous fluid communicating, pressure reduction channel (14) provided between the fluid inlet (11) and the fluid outlet (12), where the pressure reduction channel (14) reduces the pressure of the fluid due to frictional losses between the fluid in the channel (14) and the walls of the channel (14),
   where the pressure reduction channel (14) is provided in a main body (13) fastened between an end (1a) of the first fluid conducting pipe (1) and an end (2a) of the second fluid conducting pipe (2) and where the pressure reduction channel (14) is provided in an insert body (15) inserted into an opening of the main body (13), **characterized in that** the insert body (15) comprises a first section (15a) and a second section (15b), where the pressure reduction channel (14) is provided as a recess in a contact surface (30) of the first section (15a) being in contact with a corresponding contact surface (31) of the second section (15b).

2. Device according to claim 1, **characterized in that** the insert body (15) is cylindrical.

3. Device according to claim 1 or 2, **characterized in that** the first section (15a) and second section (15b) has a semicircular cross sectional shape.

4. Device according to claim 1, **characterized in that** the length of the pressure reduction channel (14) is longer than the length of the device (10). 4

5. Device according to claim 4, **characterized in that** the pressure reduction channel is S-shape or spiral shaped or sinus shaped.

6. Device according to claim 1, **characterized in that** it further comprises connectors (18) for pressure safe connection of the fluid inlet (11) and the fluid outlet (12) respectively to the respective ends (1a, 2a) of the first and second fluid conducting pipes (1, 2).

7. Device according to claim 6, **characterized in that** the connector (18) comprises recesses (42, 43) for packer elements.

8. Device according to claim 1, **characterized in that** it comprises threaded openings (19) for fastening to the respective ends (1a, 2a) of the pipes (1, 2) by means of threaded bolts (3).

9. Device according to any one of the claims above, **characterized in that** the relationship between the channel length L and the side length s or the relationship between the channel length L and the diameter d of the channel (14) should be large, for example 200 or more.

10. Device according to any one of the claims 1 - 8, **characterized in that** the relationship between the channel length L and the side length s or the relationship between the channel length L and the diameter d of the channel (14) is in the range 600 - 1200.

11. Device according to any one of the claims 1 -8, **characterized in that** the relationship between the channel length L and the side length s or the relationship between the channel length L and the diameter d of the channel (14) is approximately 1200.

**Patentansprüche**

1. Vorrichtung zum Schaffen einer steuerbaren Druckverringerung zwischen einem ersten Fluidleitungsrohr (1) und einem zweiten Fluidleitungsrohr (2), wobei die Vorrichtung (10) umfasst:

   - einen Fluideinlass (11) in Fluidkommunikation mit dem ersten Fluidleitungsrohr (1);
   - einen Fluidauslass (12) in Fluidkommunikation mit dem zweiten Fluidleitungsrohr (2);
   - einen ununterbrochenen Kanal (14) zur Fluidkommunikation und Druckverringerung, der zwischen dem Fluideinlass (11) und dem Fluidauslass (12) vorgesehen ist, wobei der Druckverringerungskanal (14) den Druck des Fluids aufgrund von Reibungsverlusten zwischen dem Fluid in dem Kanal (14) und den Wänden des Kanals (14) verringert, wobei der Druckverringerungskanal (14) in einem zwischen einem Ende (1a) des ersten Fluidleitungsrohrs (1) und einem Ende (2a) des zweiten Fluidleitungsrohrs (2) befestigten Hauptkörper (13) vorgesehen ist und wobei der Druckverringerungskanal (14) in einem Einsetzkörper (15), der in eine Öffnung des Hauptkörpers (13) eingesetzt ist, vorgesehen ist,
   **dadurch gekennzeichnet, dass** der Einsetzkörper (15) einen ersten Abschnitt (15a) und einen zweiten Abschnitt (15b) umfasst, wobei der Druckverringerungskanal (14) als eine Aussparung in einer Kontaktoberfläche (30) des ersten Abschnitts (15a) vorgesehen ist, die mit einer entsprechenden Kontaktoberfläche (31) des zweiten Abschnitts (15b) in Kontakt ist.

2. Vorrichtung nach Anspruch 1, **dadurch gekennzeichnet, dass** der Einsetzkörper (15) zylindrisch ist.

3. Vorrichtung nach Anspruch 1 oder 2, **dadurch gekennzeichnet, dass** der erste Abschnitt (15a) und der zweite Abschnitt (15b) einen halbkreisförmigen Querschnitt hat.

**4.** Vorrichtung nach Anspruch 1, **dadurch gekennzeichnet, dass** die Länge des Druckverringerungskanals (14) größer ist als die Länge der Vorrichtung (10).

**5.** Vorrichtung nach Anspruch 4, **dadurch gekennzeichnet, dass** der Druckverringerungskanal S-förmig oder spiral- bzw. schraubenlinienförmig oder sinusförmig ist.

**6.** Vorrichtung nach Anspruch 1, **dadurch gekennzeichnet, dass** sie ferner Verbinder (18) umfasst, um eine drucksichere Verbindung des Fluideinlasses (11) bzw. des Fluidauslasses (12) mit den jeweiligen Enden (1a, 2a) des ersten bzw. des zweiten Fluidleitungsrohrs (1, 2) zu schaffen.

**7.** Vorrichtung nach Anspruch 6, **dadurch gekennzeichnet, dass** der Verbinder (18) Aussparungen (42, A3) für Dichtungselemente umfasst.

**8.** Vorrichtung nach Anspruch 1, **dadurch gekennzeichnet, dass** sie Gewindeöffnungen (19) für die Befestigung an die jeweiligen Enden (1a, 2a) der Rohre (1, 2) mittels Gewindebolzen (3) umfasst.

**9.** Vorrichtung nach einem der obigen Ansprüche, **dadurch gekennzeichnet, dass** die Beziehung zwischen der Kanallänge $L$ und der Seitenlänge $s$ oder die Beziehung zwischen der Kanallänge $L$ und dem Durchmesser $d$ des Kanals (14) groß, beispielsweise 200 oder größer, sein sollte.

**10.** Vorrichtung nach einem der Ansprüche 1-8, **dadurch gekennzeichnet, dass** die Beziehung zwischen der Kanallänge $L$ und der Seitenlänge $s$ oder die Beziehung zwischen der Kanallänge $L$ und dem Durchmesser $d$ des Kanals (14) im Bereich von 600-1200 liegt.

**11.** Vorrichtung nach einem der Ansprüche 1-8, **dadurch gekennzeichnet, dass** die Beziehung zwischen der Kanallänge $L$ und der Seitenlänge $s$ oder die Beziehung zwischen der Kanallänge $L$ und dem Durchmesser $d$ des Kanals (14) ungefähr 1200 beträgt.

**Revendications**

**1.** Dispositif de fourniture d'une réduction de pression pouvant être régulée entre un premier tuyau de conduite de fluide (1) et un second tuyau de conduite de fluide (2), où le dispositif (20) comprend :

- une admission de fluide (11) en communication fluidique avec le premier tuyau de conduite de fluide (1) ;
- un refoulement de fluide (12) en communication fluidique avec le second tuyau de conduite de fluide (2) ;
- un canal de réduction de pression en communication fluidique continue (14) disposé entre l'admission de fluide (11) et le refoulement de fluide (12), où le canal de réduction de pression (14) réduit la pression du fluide en raison de pertes de frottement entre le fluide dans le canal (14) et les parois du canal (14), où le canal de réduction de pression (14) est disposé dans un corps principal (13) arrimé entre une extrémité (1a) du premier tuyau de conduite de fluide (1) et une extrémité (2a) du second tuyau de conduite de fluide (2) et où le canal de réduction de pression (14) est disposé dans un corps d'insert (15) inséré dans une ouverture du corps principal (13), **caractérisé en ce que** le corps d'insert (15) comprend une première section (15a) et une seconde section (15b), où le canal de réduction de pression (14) est disposé comme un évidement dans une surface de contact (30) de la première section (15a) qui est en contact avec une surface de contact correspondante (31) de la seconde section (15b).

**2.** Dispositif selon la revendication 1, **caractérisé en ce que** le corps d'insert (15) est cylindrique.

**3.** Dispositif selon la revendication 1 ou 2, **caractérisé en ce que** la première section (15a) et la seconde section (15b) ont une forme en coupe semi-circulaire.

**4.** Dispositif selon la revendication 1, **caractérisé en ce que** la longueur du canal de réduction de pression (14) est plus grande que la longueur du dispositif (10).

**5.** Dispositif selon la revendication 4, **caractérisé en ce que** le canal de réduction de pression est en forme de S, ou en forme de spirale, ou en forme de sinus.

6. Dispositif selon la revendication 1, **caractérisé en ce qu'**il comprend en outre des raccords (18) pour un raccordement à l'épreuve de la pression de l'admission de fluide (11) et du refoulement de fluide (12) respectivement aux extrémités (1a, 2a) respectives des premier et second tuyaux de conduite de fluide (1, 2).

7. Dispositif selon la revendication 6, **caractérisé en ce que** le raccord (18) comprend des évidements (42, 43) pour des éléments de garniture d'étanchéité.

8. Dispositif selon la revendication 1, **caractérisé en ce qu'**il comprend des ouvertures filetées (19) pour arrimage aux extrémités (1a, 2a) respectives des tuyaux (1, 2) au moyen de boulons filetés (3).

9. Dispositif selon l'une quelconque des revendications ci-dessus, **caractérisé en ce que** la relation entre la longueur de canal L et la longueur de côté s ou la relation entre la longueur de canal L et le diamètre d du canal (14) doit être grande, par exemple de 200 ou plus.

10. Dispositif selon l'une quelconque des revendications 1 à 8, **caractérisé en ce que** la relation entre la longueur de canal L et la longueur de côté s ou la relation entre la longueur de canal L et le diamètre d du canal (14) se trouve dans la plage de 600 à 1 200.

11. Dispositif selon l'une quelconque des revendications 1 à 8, **caractérisé en ce que** la relation entre la longueur de canal L et la longueur de côté s ou la relation entre la longueur de canal L et le diamètre d du canal (14) est approximativement de 1 200.

Fig. 1

Fig. 2

Fig. 3

Fig. 4

Fig. 5

Fig. 6

Fig. 7

Fig. 8

EP 2 386 041 B1

Fig. 9

Fig. 10

Fig. 11

15    14

Fig. 12

15    14

Fig. 13

15    14

Fig. 14

15    14

Fig. 15

**EP 2 386 041 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4106525 A
- DE 102007050225
- WO 2006087746 A
- US 4043360 A